# EUROPÄISCHE PATENTSCHRIFT

(11) **EP 2 740 583 B1**
(45) Veröffentlichungstag und Bekanntmachung des Hinweises auf die Patenterteilung: **01.11.2017**
(21) Anmeldenummer: 12008095.7
(22) Anmeldetag: 04.12.2012
(51) Int. Cl.: B29C 65/48, B29C 65/54, B29C 65/50, B29L 31/08

(54) **Verfahren zur Herstellung eines Windenergieanlagenrotorblatts mit einem ersten und einem zweiten Blattsegment und Windenergieanlagenrotorblatt**
Method for producing a wind power plant rotor blade with a first and a second blade segment and wind power plant rotor blade
Procédé de fabrication d'une pale de rotor d'éolienne avec un premier et un deuxième segment de pale et pale de rotor d'éolienne

(43) Veröffentlichungstag der Anmeldung: 11.06.2014
(73) Patentinhaber: Nordex Energy GmbH, 22419 Hamburg (DE)
(72) Erfinder: Frankowski, Marco, 18347 Ostseebad Wustrow (DE)
(74) Vertreter: Hauck Patentanwaltspartnerschaft mbB

(56) Entgegenhaltungen:
- WO-A1-2006/002621
- JP-A- 2006 123 277
- US-A1- 2011 206 529

## Beschreibung

Die Erfindung betrifft ein Verfahren zur Herstellung eines Windenergieanlagenrotorblatts, bei dem zwei Blattsegmente, die jeweils eine aerodynamische Oberfläche und einen Abschnitt einer Tragstruktur aufweisen, miteinander verbunden werden. Die Erfindung betrifft außerdem ein solches Windenergieanlagenrotorblatt.

Die immer größer werdenden Abmessungen moderner Rotorblätter für Windenergieanlagen stellen komplexe Anforderungen an die Fertigung, den Transport und die Montage der Rotorblätter. Es sind unterschiedliche Konzepte für eine Teilung der Windenergieanlagenrotorblätter in mehrere Blattsegmente vorgeschlagen worden. Besonders vorteilhaft erscheint eine Teilung der Rotorblätter in zwei oder mehr Längsabschnitte, beispielsweise in ein blattwurzelseitiges Blattsegment und ein blattspitzenseitiges Blattsegment. Die Blattsegmente können getrennt voneinander gefertigt und zum Errichtungsort der Windenergieanlage transportiert werden. Erst dort werden die Blattsegmente zusammengefügt und das fertige Rotorblatt an der Windenergieanlage montiert. Das Zusammenfügen der Blattsegmente ist wegen der hohen Anforderungen an die Maßhaltigkeit und Festigkeit der Verbindung schwierig. Außerdem soll sich das Gewicht des zusammengefügten Rotorblatts durch die Verbindung so wenig wie möglich erhöhen.

Aus der Druckschrift WO 2009/030228 A1 ist ein Verfahren zum Zusammenfügen eines Windenergieanlagenrotorblatts aus zwei Blattsegmenten bekannt geworden. Bei dem bekannten Verfahren stehen lose Enden von Verstärkungsfasern eines faserverstärkten Kunststoffmaterials im Bereich der Verbindung aus den vorgefertigten Segmenten hervor. Diese werden überlappend angeordnet und miteinander verklebt.

Aus der Druckschrift US 7,922,454 B1 ist eine Art Steckverbindung für zwei Blattsegmente eines Windenergieanlagenrotorblatts bekannt geworden. An einem der beiden Segmente ist ein ringförmiges Verstärkungselement eingearbeitet, das mit den Hauptgurten des Blattsegments verbunden ist. Am anderen Blattsegment steht ein Schaftabschnitt hervor, der mit den Hauptgurten dieses Blattsegments verbunden ist und in den ringförmigen Verstärkungsabschnitt eingesetzt wird.

Aus der Druckschrift EP 2 264 310 A2 ist ein Verfahren zum Verkleben zweier Blattsegmente bekannt geworden. Bei diesem bekannten Verfahren weist das Rotorblatt eine Tragstruktur aus zwei Hauptgurten auf, die mit einem Steg miteinander verbunden sind. Jedes der beiden Blattsegmente weist einen Abschnitt von jedem Gurt und von dem Steg auf. Die Hauptgurte sind im Verbindungsbereich geschäftet, sodass sie einander überlappen. Die beiden Segmente werden ineinander geschoben und miteinander verklebt.

Aus der Druckschrift JP 2006-123277 A ist ein aus einem Hohlprofil bestehendes Windenergieanlagenrotorblatt bekannt geworden, das aus zwei Blattsegmenten zusammengefügt ist. Die beiden Blattsegmente werden an einer Verbindungsstelle durch Aufbringen einer streifenförmigen Verstärkungsplatte und Vernähen der Blattsegmente miteinander verbunden.

Aus der Druckschrift WO 2006/002621 A1 ist ein Rotorblatt mit den Merkmalen des Oberbegriffs des Anspruchs 8 bekannt geworden.

Davon ausgehend ist es die Aufgabe der Erfindung, ein Verfahren zur Herstellung eines Windenergieanlagenrotorblatts zur Verfügung zu stellen, mit dem zwei Blattsegmente besonders einfach, passgenau und stabil miteinander verbunden werden können, sowie ein entsprechendes Windenergieanlagenrotorblatt.

Diese Aufgabe wird gelöst durch das Verfahren mit den Merkmalen des Anspruchs 1. Vorteilhafte Ausgestaltungen sind in den sich anschließenden Unteransprüchen angegeben.

Das Verfahren dient zur Herstellung eines Windenergieanlagenrotorblatts und weist die folgenden Schritte auf:
- Bereitstellen eines ersten Blattsegments, das eine aerodynamische Oberfläche und einen ersten Abschnitt mindestens einer Tragstruktur aus einem faserverstärkten Kunststoffmaterial, die in einer Längsrichtung des Rotorblatts verläuft, aufweist,
- Bereitstellen eines zweiten Blattsegments, das eine aerodynamische Oberfläche und einen zweiten Abschnitt der mindestens einen Tragstruktur aufweist,
- Bereitstellen einer vorgefertigten Manschette aus einem faserverstärkten Kunststoffmaterial,
- Positionieren der beiden Blattsegmente relativ zu einander derart, dass der erste Abschnitt und der zweite Abschnitt in einem Verbindungsbereich überlappend angeordnet sind,
- Positionieren der Manschette derart, dass sie den Verbindungsbereich allseitig umschließt,
- Verkleben der Manschette mit dem ersten Abschnitt,
- Verkleben der Manschette mit dem zweiten Abschnitt,
- Verkleben des ersten Abschnitts mit dem zweiten Abschnitt.

Bei dem ersten und zweiten Blattsegment handelt es sich um Längsabschnitte des Windenergieanlagenrotorblatts, beispielsweise um einen blattwurzelseitigen Längsabschnitt und einen blattspitzenseitigen Längsabschnitt. Es versteht sich, dass das Windenergieanlagenrotorblatt auch in drei oder mehr Blattsegmente, die jeweils einen Längsabschnitt des Rotorblatts bilden, unterteilt sein kann. Die Blattsegmente
weisen eine aerodynamische Oberfläche auf, das heißt eine Oberfläche, die im Betrieb des fertigen Windenergieanlagenrotorblatts eine aerodynamisch wirksame Fläche bildet. Außerdem weist jedes Blattsegment mindestens eine Tragstruktur auf, das heißt ein Konstruktionselement, das dem fertigen Rotorblatt seine Festigkeit verleiht. Bei der mindestens einen Tragstruktur handelt es sich um einen Gurt, insbesondere um einen Hauptgurt des Windenergieanlagenrotorblatts. Die mindestens eine Tragstruktur besteht aus einem faserverstärkten Kunststoffmaterial, bei dem als Verstärkungsfasern zum Beispiel Glasfasern oder Kohlenstofffasern Verwendung finden. Die aerodynamische Oberfläche kann beispielsweise an der Außenseite einer Rotorblatthalbschale, die ebenfalls aus einem faserverstärkten Kunststoffmaterial hergestellt sein kann, ausgebildet sein. Die mindestens eine Tragstruktur verläuft in einer Längsrichtung des Rotorblatts. Sie kann sich über einen Teil der Gesamtlänge des Rotorblatts erstrecken, der den Verbindungsbereich einschließt, oder über die gesamte Länge des Rotorblatts, insbesondere beginnend von einer Blattwurzel bis hin zu einer Blattspitze.

Die Manschette besteht aus einem faserverstärkten Kunststoffmaterial. Dies kann insbesondere dasselbe Material sein, aus dem auch die mindestens eine Tragstruktur besteht, etwa ein mit Glasfasern oder Kohlenstofffasern verstärktes Kunststoffmaterial. Die Manschette ist vorgefertigt, das heißt sie weist bereits vor dem Zusammenfügen des Windenergieanlagenrotorblatts aus den beiden Blattsegmenten und der Manschette ihre endgültige Gestalt und Festigkeit auf. Die Manschette wird so positioniert, dass sie den Verbindungsbereich allseitig umschließt. Im Falle einer Tragstruktur mit rechteckigem Querschnitt ist damit gemeint, dass die Manschette alle vier Seitenkanten des Rechtecks umschließt. Weist die mindestens eine Tragstruktur eine andere Geometrie auf, insbesondere in Form eines Zylinders mit beliebiger Querschnittsform, umgibt die vorgefertigte Manschette die Mantelflächen des Zylinders. Ist die mindestens eine Tragstruktur beispielsweise kreiszylindrisch, kann die vorgefertigte Manschette kreiszylindermantelförmig sein.

Bei der Erfindung werden die beiden Blattsegmente relativ zu einander in ihrer für das fertige Windenergieanlagenrotorblatt vorgesehenen Position angeordnet, in der sie miteinander verklebt werden. Dabei überlappen sich der erste und zweite Abschnitt der mindestens einen Tragstruktur in einem Verbindungsbereich, welcher von der Manschette umschlossen wird. Die Manschette wird mit dem ersten Abschnitt und mit dem zweiten Abschnitt verklebt. Es versteht sich, dass das Positionieren der beiden Blattsegmente und der Manschette sowie das Verkleben dieser Elemente miteinander grundsätzlich in einer beliebigen Reihenfolge erfolgen kann. Insbesondere können alle genannten Elemente gleichzeitig oder nacheinander miteinander verklebt werden, wobei nur die jeweils miteinander verklebten Elemente zuvor in der genannten Art und Weise positioniert werden müssen.

Durch die erfindungsgemäß vorgesehene Verwendung einer Manschette, die den Verbindungsbereich allseitig umschließt, und die überlappende Anordnung der beiden Abschnitte der mindestens einen Tragstruktur in dem Verbindungsbereich wird eine hochfeste Verklebung erreicht. Dabei kann die Manschette insbesondere seitlich zu einer Längsrichtung der mindestens einen Tragstruktur wirkende Scherkräfte wirksam aufnehmen. Gleichzeitig vereinfacht die Manschette die maßgetreue Positionierung der beiden Abschnitte der mindestens einen Tragstruktur relativ zu einander. Ein weiterer Vorteil besteht darin, dass die Prozessparameter für die Verklebung im Verbindungsbereich durch die diesen Bereich umgebende Manschette besser kontrolliert werden können. So vereinfacht die Manschette die Anwendung eines Über- oder Unterdrucks oder einer bestimmten Temperatur im Verbindungsbereich und schützt diesen vor Umwelteinflüssen.

In einer Ausgestaltung erfolgt das Positionieren der beiden Blattsegmente relativ zu einander erst, nachdem die Manschette mit dem ersten Abschnitt verklebt ist. Zu diesem Zeitpunkt ist die Verklebung der Manschette mit dem ersten Abschnitt weitgehend ausgehärtet, sodass die Verbindung zwischen Manschette und dem ersten Abschnitt zumindest teilweise belastbar ist. Dadurch kann die Manschette beim Zusammenführen der beiden Blattsegmente eine Führungsaufgabe übernehmen. Das freie Ende des zweiten Abschnitts der mindestens einen Tragstruktur braucht im Wesentlichen nur in eine Öffnung der Manschette eingeführt und nachfolgend das zweite Blattsegment soweit wie möglich an das erste Blattsegment heran bewegt zu werden, um die vorgesehene Positionierung der beiden Blattsegmente relativ zu einander zu erreichen.

In einer Ausgestaltung wird zum Verkleben des ersten Abschnitts mit dem zweiten Abschnitt Klebstoff auf eine Kontaktfläche des ersten Abschnitts und/oder des zweiten Abschnitts aufgetragen, bevor die beiden Blattsegmente relativ zu einander positioniert werden. Zu diesem Zeitpunkt ist das Auftragen des Klebstoffs besonders einfach möglich.

In einer Ausgestaltung wird zum Verkleben des zweiten Abschnitts mit der Manschette Klebstoff auf eine Kontaktfläche des zweiten Abschnitts und/oder der Manschette aufgetragen, bevor die beiden Blattsegmente relativ zu einander positioniert werden. Auch dies ist zu diesem Zeitpunkt besonders einfach möglich.

In einer Ausgestaltung wird zwischen dem ersten Abschnitt und dem zweiten Abschnitt und/oder zwischen dem ersten Abschnitt und der Manschette und/oder zwischen dem zweiten Abschnitt und der Manschette Klebstoff angeordnet, nachdem die beiden Blattsegmente relativ zu einander positioniert worden sind. In diesem Fall kann die korrekte Positionierung der betreffenden Elemente vor dem Anordnen des Klebstoffs überprüft werden, sodass Abweichungen in der Positionierung infolge vorzeitig aushärtenden Klebstoffs vermieden werden können.

In einer Ausgestaltung erfolgt das Anordnen des Klebstoffs mit einem Injektionsverfahren und/oder mit einem Infusionsverfahren. Bei einem Injektionsverfahren wird der Klebstoff unter Druck in einen Freiraum zwischen den zu verklebenden Elementen hineingepresst. Bei einem Infusionsverfahren wird in diesem Freiraum ein Unterdruck erzeugt, sodass der Klebstoff ebenfalls aufgrund einer Druckdifferenz gegenüber der Umgebung in den Freiraum hineingesaugt bzw. gepresst wird. Derartige Infusionsverfahren werden auch als Vakuuminfusionsverfahren bezeichnet. Für alle genannten Verklebungen kann als Klebstoff insbesondere dasjenige Kunststoffmaterial verwendet werden, in das die Verstärkungsfasern der mindestens einen Tragstruktur eingebettet sind, beispielsweise ein Zweikomponentenklebstoff auf Polyester- oder Epoxidharzbasis.

In einer Ausgestaltung erfolgt die Klebstoffzufuhr über einen in einer Wandung der Manschette an einem ersten Ende der Manschette angeordneten Angusskanal der Manschette, wobei eine Absaugung der Luft über einen Absaugkanal der Manschette erfolgt, der dem Angusskanal schräg gegenüberliegend angeordnet ist. Der Absaugkanal kann ebenfalls in einer Wandung der Manschette angeordnet sein. Zum Beispiel kann die Manschette eine erste Flachseite aufweisen, die einer zweiten Flachseite gegenüberliegt. Der Ansaugkanal kann an der ersten Flachseite angeordnet sein, insbesondere an einem ersten Ende der Manschette, zum Beispiel an dem der Blattwurzel zugewandten Ende der Manschette. Der Absaugkanal liegt dann schräg gegenüber, d.h. im Beispiel an der zweiten Flachseite der Manschette und an einem zweiten Ende der Manschette, nämlich dem der Blattspitze zugewandten. Der Ansaugkanal und/oder der Absaugkanal kann sich im Wesentlichen über die gesamte Breite der betreffenden Flachseite erstrecken. Diese Ausgestaltung ist insbesondere vorteilhaft in Verbindung mit einer sogenannten mehrschnittigen Verbindung zwischen den beiden Abschnitten der Tragstruktur. Mehrschnittige Verbindungen führen zu einer Vergrößerung der Klebeflächen, die dazwischen befindlichen Freiräume sind jedoch schwieriger vollständig mit Klebstoff zu füllen. Die beiden Abschnitte können miteinander verzahnt sein, insbesondere mit Zähnen, die sich in Längsrichtung der Tragstruktur erstrecken und deren Flanken im Wesentlichen rechtwinklig zu der ersten und zweiten Flachseite angeordnet sind. In diesem Fall kann der Ansaugkanal so angeordnet sein, dass er sämtliche, zwischen benachbarten Zähnen ausgebildete Freiräume einmal kreuzt, insbesondere nahe der Spitzen der an einem der Abschnitte ausgebildeten Zähne. Der schräg gegenüberliegende Absaugkanal kann ebenfalls sämtliche Freiräume zwischen benachbarten Zähnen einmal kreuzen, insbesondere nahe der Spitzen der an dem anderen Abschnitt ausgebildeten Zähne. Dadurch kann eine gleichmäßige Befüllung sämtlicher Freiräume erreicht werden. Diese wird durch eine sich gleichmäßig ausbreitende Fließfront des Klebstoffs begünstigt, die sich vom Angusskanal schräg durch den gesamten Verbindungsbereich bis hin zum Absaugkanal bewegt. Dies gelingt unabhängig von der genauen Ausführung der mehrschnittigen Verbindung, gegebenenfalls auch bei Verwendung einer einfachen Schäftung oder sonstigen Überlappung der Abschnitte.

In einer Ausgestaltung weist das Rotorblatt zwei Gurte auf, die jeweils eine der Tragstrukturen bilden, und zwischen den beiden Gurten ist ein Steg angeordnet, wobei das erste Blattsegment einen ersten Abschnitt des Stegs aufweist, der zwischen den ersten Abschnitten der beiden Gurte angeordnet und mit diesen verbunden ist, und das zweite Blattsegment einen zweiten Abschnitt des Stegs aufweist, der zwischen den zweiten Abschnitten der beiden Gurte angeordnet und mit diesen verbunden ist, wobei im Verbindungsbereich zwischen dem ersten Abschnitt des Stegs und den ersten Abschnitten der beiden Gurte sowie zwischen dem zweiten Abschnitt des Stegs und den zweiten Abschnitten der beiden Gurte jeweils eine Aussparung vorhanden ist, wobei beim Positionieren der beiden Blattsegmente relativ zu einander zwei vorgefertigte Manschetten in die Aussparungen eingesetzt werden. Bei den beiden Gurten kann es sich insbesondere um zwei Hauptgurte des Rotorblatts handeln, insbesondere um einen druckseitigen und einen saugseitigen Hauptgurt. Die Hauptgurte nehmen die im Betrieb des Windenergieanlagenrotorblatts in Längsrichtung auftretenden Lasten auf, während der dazwischen angeordnete Steg Scherkräfte aufnimmt und die beiden Hauptgurte in ihrer vorgesehenen Anordnung relativ zu einander hält. Durch das Vorsehen von Aussparungen an den genannten Stellen können die beiden vorgefertigten Manschetten in ihrer vorgesehenen Anordnung, nämlich den jeweiligen Verbindungsbereich zwischen den Gurtabschnitten allseitig umschließend, angeordnet werden. Wahlweise können Außenseiten der vorgefertigten Manschetten mit angrenzenden Kontaktflächen am jeweiligen Stegabschnitt verklebt werden.

Die oben genannte Aufgabe wird ebenfalls gelöst durch das Windenergieanlagenrotorblatt mit den Merkmalen des Anspruchs 8. Vorteilhafte Ausgestaltungen sind in den sich anschließenden Unteransprüchen angegeben.

Das Windenergieanlagenrotorblatt hat mindestens eine in einer Längsrichtung des Windenergieanlagenrotorblatts verlaufende Tragstruktur aus einem faserverstärkten Kunststoffmaterial,
- ein erstes Blattsegment, das eine aerodynamische Oberfläche und einen ersten Abschnitt der mindestens einen Tragstruktur aufweist,
- ein zweites Blattsegment, das eine aerodynamische Oberfläche und einen zweiten Abschnitt der mindestens einen Tragstruktur aufweist,
- wobei der erste Abschnitt der mindestens einen Tragstruktur und der zweite Abschnitt der mindestens einen Tragstruktur derart miteinander verklebt sind, dass sie einander in einem Verbindungsbereich überlappen, und
- wobei eine vorgefertigte Manschette aus einem faserverstärkten Kunststoffmaterial, die den Verbindungsbereich allseitig umschließt, mit den beiden Abschnitten der Tragstruktur verklebt ist.

Das Windenergieanlagenrotorblatt kann insbesondere mit dem vorstehend erläuterten Verfahren hergestellt worden sein. Zur Erläuterung der Merkmale des Windenergieanlagenrotorblatts wird zunächst auf die vorstehenden Erläuterungen des erfindungsgemäßen Verfahrens verwiesen, die entsprechend gelten. Es versteht sich, dass die einzelnen Merkmale des Verfahrens mit dem Windenergieanlagenrotorblatt kombiniert werden können, ebenso wie die nachfolgend erläuterten einzelnen Merkmale des Windenergieanlagenrotorblatts in Verbindung mit dem Verfahren verwendet werden können. Das erfindungsgemäße Windenergieanlagenrotorblatt zeichnet sich durch die vorgefertigte Manschette aus, die die Herstellung vereinfacht und die Stabilität und Maßhaltigkeit des Windenergieanlagenrotorblatts verbessert.

In einer Ausgestaltung liegen zwei einander gegenüberliegende Innenflächen der Manschette an einander gegenüberliegenden äußeren Flächen der mindestens einen Tragstruktur an. Zwischen den genannten Flächen kann eine dünne Klebstoffschicht ausgebildet sein. Durch das Zusammenwirken der genannten Flächen wird die relative Anordnung der beiden Blattsegmente zueinander bereits bei der Montage vorgegeben und nach dem Aushärten des Klebstoffs dauerhaft fixiert.

In einer Ausgestaltung ist eine Länge der Manschette größer als eine Länge des Verbindungsbereichs. Die genannten Längen werden in Längsrichtung des Windenergieanlagenrotorblatts betrachtet, bzw. in Längsrichtung der mindestens einen Tragstruktur. Mit anderen Worten steht die Manschette über den Verbindungsbereich über, ggf. auf beiden Seiten. Dadurch erhöht sich die Festigkeit der Verbindung.

In einer Ausgestaltung weist die mindestens eine Tragstruktur im Verbindungsbereich und an dem Verbindungsbereich benachbarten Längspositionen einen gleichmäßigen Außenquerschnitt auf und die Manschette eine Durchgangsöffnung, deren Innenquerschnitt auf den Außenquerschnitt abgestimmt ist. Dass die Querschnitte aufeinander abgestimmt sind bedeutet, dass die beiden Abschnitte der mindestens einen Tragstruktur einfach in der Durchgangsöffnung der Manschette angeordnet und in der gewünschten relativen Anordnung zueinander durch die Manschette stabilisiert werden können. Hierzu kann der Innenquerschnitt bevorzugt geringfügig größer sein als der Außenquerschnitt, insbesondere, um eine Klebefuge in der gewünschten Dicke zu bilden.

Die beiden Abschnitte können in dem Verbindungsbereich eine Schäftung oder eine mehrschnittige Verbindung, beispielsweise eine Verzahnung, aufweisen. Dadurch wird die Klebefläche zwischen den beiden Abschnitten vergrößert und die Krafteinleitung von dem ersten Abschnitt in den zweiten Abschnitt oder umgekehrt unter Belastung besonders gleichmäßig über den Verbindungsbereich verteilt. Insgesamt wird eine besonders stabile Verbindung erzielt.

In einer Ausgestaltung weist die Manschette zwei einander gegenüberliegende Flachseiten auf, die relativ zu einander in der Längsrichtung versetzt angeordnet sind. Die beiden Flachseiten können etwa oder genau die gleiche Form und Größe aufweisen. Der Versatz in Längsrichtung kann insbesondere so gewählt sein, dass eine Klebefuge zwischen den beiden Abschnitten der mindestens einen Tragstruktur von einer angrenzenden Flachseite der Manschette überdeckt wird, wobei sich die jeweilige Flachseite bevorzugt um 50 mm oder mehr oder 100 mm oder mehr über die Längsposition der Klebefuge hinaus erstreckt. Insbesondere bei einer Schäftung der mindestens einen Tragstruktur führt ein solcher Versatz zwischen den gegenüberliegenden Flachseiten der Manschette dazu, dass die Manschette Scherkräfte besonders gut aufnehmen kann und gleichzeitig ein geringes Gewicht aufweist.

In einer Ausgestaltung weist das Rotorblatt zwei Gurte auf, die jeweils eine der Tragstrukturen bilden, und zwischen den beiden Gurten ist ein Steg angeordnet, der mit den beiden Gurten verbunden ist und zwei Aussparungen aufweist, in denen jeweils eine Manschette angeordnet ist. Hierzu wird auf die vorstehenden Erläuterungen der entsprechenden Verfahrensmerkmale verwiesen.

In einer Ausgestaltung weist die Manschette in einer Wandung eine Öffnung und/oder an einer Innenseite einen Kanal zur Injektion oder Infusion eines Klebstoffs auf. Durch diese Ausgestaltung der Manschette kann der Klebstoff besonders einfach in alle Klebstofffugen zwischen den beiden Abschnitten der mindestens einen Tragstruktur und der Manschette eingebracht werden, insbesondere in einem Injektions- oder Infusionsverfahren, wie vorstehend bereits erläutert. Dabei kann die Manschette an den Enden ihrer Durchgangsöffnung, aus denen die beiden Abschnitte der mindestens einen Tragstruktur hervorstehen, luftdicht gegenüber diesen Abschnitten abgeschlossen werden. Wegen der den Verbindungsbereich im Übrigen allseitig umschließenden Ausbildung der Manschette wird durch diese einfache Maßnahme ein mit Klebstoff zu füllendes Volumen geschaffen und gegenüber der Umgebung abgedichtet.

In einer Ausgestaltung weist die Manschette einen Angusskanal und einen Absaugkanal auf, wobei der Angusskanal in einer Wandung der Manschette an einem ersten Ende der Manschette und der Absaugkanal dem Angusskanal schräg gegenüberliegend angeordnet ist. Die Vorteile dieser Ausgestaltung und Einzelheiten zu den möglichen Anordnungen der Kanäle wurden bereits in Verbindung mit dem Verfahren näher erläutert.

Ein Aspekt der Erfindung, der auch völlig unabhängig von dem beanspruchten Verfahren und dem beanspruchten Windenergieanlagenrotorblatt von Bedeutung ist, ist die Manschette, insbesondere, wenn sie die folgenden Merkmale in Kombination aufweist:

Manschette zur Verbindung zweier Abschnitte einer Tragstruktur eines Windenergieanlagenrotorblatts mit
- einem Grundkörper, der dazu ausgebildet ist, einen Verbindungsbereich der beiden Abschnitte allseitig zu umschließen,
- einem in einer Wandung der Manschette an einem ersten Ende der Manschette angeordneten Angusskanal,
- einem in einer Wandung der Manschette an einem zweiten Ende der Manschette angeordneten Absaugkanal, wobei
- der Angusskanal schräg gegenüberliegend von dem Absaugkanal angeordnet ist und
- die Manschette aus einem faserverstärkten Kunststoffmaterial vorgefertigt ist.

Die Manschette kann insbesondere verwendet und weiter ausgestaltet werden, wie im Zusammenhang mit dem Verfahren bzw. dem Windenergieanlagenrotorblatt bereits erläutert. Auch zu den besonderen Vorteilen der Manschette wird auf die vorstehenden Ausführungen verwiesen.

Die Erfindung wird nachfolgend anhand eines in Figuren dargestellten Ausführungsbeispiels näher erläutert. Es zeigen:
- Fign. 1 bis 4: zwei Blattsegmente mit zwei vorgefertigten Manschetten in schematischen Querschnittsdarstellungen zu unterschiedlichen Zeitpunkten während der Ausführung des erfindungsgemäßen Verfahrens und
- Fig. 5: eine vorgefertigte Manschette in einer vereinfachten, perspektivischen Darstellung,
- Fig. 6: eine weitere, vorgefertigte Manschette in einer vereinfachten, perspektivischen Darstellung,
- Fig. 7: die Manschette aus Fig. 6 mit zwei darin angeordneten, miteinander verzahnten Abschnitten einer Tragstruktur in einer vereinfachten, perspektivischen und teilweise geschnittenen Darstellung.

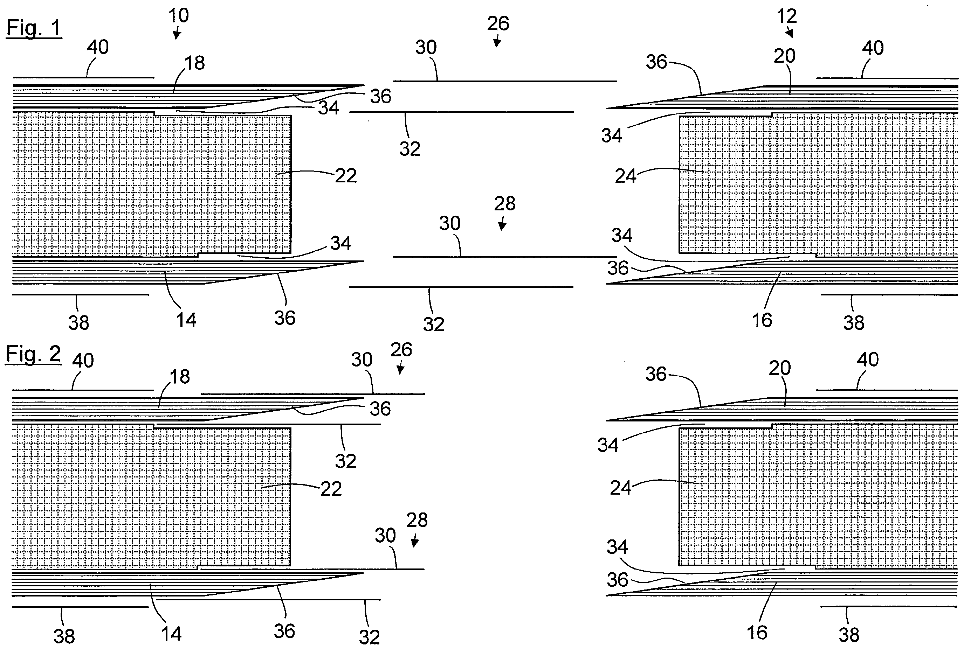

Fig. 1 zeigt links ein erstes Blattsegment 10 und rechts ein zweites Blattsegment 12 in einer Ausgangsposition, in der sich die beiden Blattsegmente 10, 12 in einem Abstand voneinander befinden. Die Längsrichtung des Windenergieanlagenrotorblatts entspricht der Rechts-Links-Richtung in den Figuren 1 bis 4. Das erste Blattsegment 10 weist einen ersten Abschnitt 14 eines druckseitigen Hauptgurts auf. Das zweite Blattsegment 12 weist einen zweiten Abschnitt 16 des druckseitigen Hauptgurts auf. Der druckseitige Hauptgurt ist eine Tragstruktur des Windenergieanlagenrotorblatts und verläuft in dessen Längsrichtung. Eine weitere Tragstruktur des Windenergieanlagenrotorblatts ist ein saugseitiger Hauptgurt mit einem ersten Abschnitt 18, der Teil des ersten Blattsegments 10 ist, und einem zweiten Abschnitt 20, der Teil des zweiten Blattsegments 12 ist.

Der erste Abschnitt 14 des druckseitigen Hauptgurts und der erste Abschnitt 18 des saugseitigen Hauptgurts sind über den ersten Abschnitt 22 eines Stegs mit einander verbunden. Der zweite Abschnitt 16 des druckseitigen Hauptgurts und der zweite Abschnitt 20 des saugseitigen Hauptgurts sind über einen zweiten Abschnitt 24 des Stegs miteinander verbunden. Die ersten und zweiten Abschnitte 14, 16, 18, 20 der beiden Hauptgurte weisen jeweils eine Schäftung 36 auf, deren Länge (betrachtet in Längsrichtung des Windenergieanlagenrotorblatts) einen Verbindungsbereich beschreibt, in dem die genannten Abschnitte einander überlappen. Zwischen jedem der Abschnitte 14, 16, 18, 20 und einem benachbart angeordneten Abschnitt 22, 24 des Stegs ist jeweils eine Aussparung 34 ausgebildet.

Außerdem zeigt Fig. 1 zwei vorgefertigte Manschetten 26, 28, die jeweils eine erste Flachseite 30 und eine zweite Flachseite 32 aufweisen. Die Manschette 26 ist auf der Saugseite angeordnet und zur Verbindung des ersten Abschnitts 18 und des zweiten Abschnitts 20 des saugseitigen Hauptgurts vorgesehen. Die Manschette 28 ist auf der Druckseite des Windenergieanlagenrotorblatts angeordnet und zur Verbindung des ersten Abschnitts 14 und des zweiten Abschnitts 16 des druckseitigen Hauptgurts vorgesehen. Die beiden Flachseiten 30, 32 der beiden Manschetten 26, 28 sind jeweils einander gegenüberliegend angeordnet und weisen in Längsrichtung des Windenergieanlagenrotorblatts einen Versatz auf.

Das erste Blattsegment 10 und das zweite Blattsegment 12 weisen außerdem jeweils eine druckseitige Rotorblatthalbschale 38 und eine saugseitige Rotorblatthalbschale 40 auf, die fest mit den benachbart angeordneten Hauptgurten verbunden sind und aerodynamische Flächen des Windenergieanlagenrotorblatts bilden, nämlich mit ihren jeweiligen Außenseiten.

In der Fig. 2 sind die beiden Manschetten 26, 28 relativ zu dem ersten Blattsegment 10 positioniert worden, sodass sie den späteren Verbindungsbereich zwischen den Abschnitten 14, 16, 18, 20 der beiden Hauptgurte allseitig umschließen. Hierzu sind die beiden Manschetten 26, 28 auf die freien Enden der ersten Abschnitte 14, 18 aufgeschoben worden, wobei die innen liegende Flachseite 32 der saugseitigen Manschette 26 in die Aussparung 34 zwischen dem ersten Abschnitt 18 des saugseitigen Hauptgurts und dem ersten Abschnitt 22 des Stegs eingesetzt wurde. Entsprechend wurde die innen liegende Flachseite 30 der druckseitigen Manschette 28 in die Aussparung 34 zwischen dem ersten Abschnitt 14 des druckseitigen Hauptgurts und dem ersten Abschnitt 22 des Stegs eingesetzt.

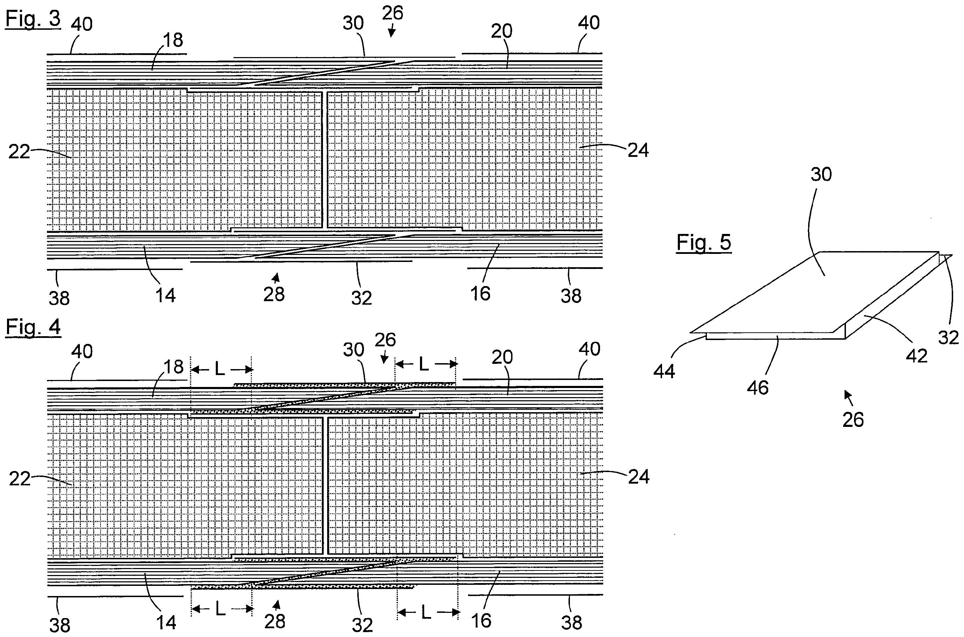

Eine Verklebung der Manschetten 26, 28 mit dem ersten Blattsegment 10 findet bei der in den Figuren vorgeschlagenen Verfahrensweise noch nicht statt. Stattdessen wird im nächsten Schritt das zweite Blattsegment 12 relativ zu dem ersten Blattsegment 10 in der für die endgültige Verklebung vorgesehenen Anordnung positioniert, wie in der Fig. 3 dargestellt. Man erkennt, dass die beiden Manschetten 26, 28 in dieser Anordnung die jeweiligen Verbindungsbereiche zwischen den ersten und zweiten Abschnitten 14, 16, 18, 20 der beiden Hauptgurte allseitig umschließen.

Anschließend wird der erste Abschnitt 14 des druckseitigen Hauptgurts mit dem zweiten Abschnitt 16 des druckseitigen Hauptgurts und mit der Manschette 28 verklebt, ebenso wie die Manschette 28 mit dem zweiten Abschnitt 16 des druckseitigen Hauptgurts verklebt wird. Eine entsprechende Verklebung mit den korrespondierenden Abschnitten 18, 20 des saugseitigen Hauptgurts findet mit der anderen Manschette 26 statt. Der Klebstoff kann insbesondere in einem Vakuuminfusionsverfahren durch nicht gezeigte Öffnungen in den Manschetten 26, 28 und zwecks Verteilung durch an der Innenseite dieser Manschetten 26, 28 angeordnete Kanäle in die Freiräume zwischen den zu verklebenden Elementen injiziert werden.

In Fig. 4 erkennt man am besten, dass die Länge der druckseitigen Manschette 28 größer ist als die Länge des Verbindungsbereichs, in dem sich der erste Abschnitt 14 und der zweite Abschnitt 16 des druckseitigen Hauptgurts überlappen. Entsprechendes gilt für die saugseitige Manschette 26. Außerdem erkennt man, dass wegen des Versatzes der ersten Flachseite 30 relativ zur zweiten Flachseite 32 bei beiden Manschetten 26, 28 benachbart angeordnete Klebefugen zwischen den verklebten Abschnitten 14, 16, 18, 20 optimal abgedeckt werden. Die betreffenden Flachseiten 30, 32 stehen jeweils in der Längsrichtung des jeweiligen Gurts mit einer Länge L im Bereich von etwa 100 mm bis 200 mm über die jeweilige Klebefuge über.

Fig. 5 zeigt beispielhaft die Manschette 26 aus den Fig. 1 bis 4 in einer perspektivischen Ansicht. Man erkennt die beiden einander gegenüberliegenden Flachseiten 30, 32, die relativ zu einander versetzt angeordnet sind. Seitlich werden die Flachseiten 30, 32 von rechtwinklig dazu angeordneten Stirnseiten 42, 44 miteinander verbunden. Wie man in der Fig. 5 erkennen kann, weist die Manschette 26 eine Durchgangsöffnung 46 mit gleichmäßigem, rechteckigem Querschnitt auf.

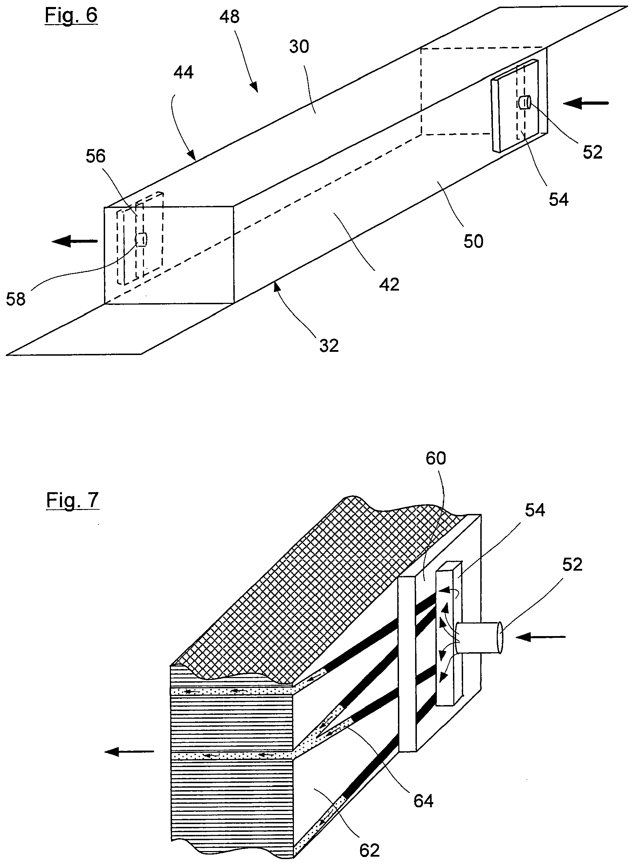

Fig. 6 zeigt eine erfindungsgemäße Manschette 48. Sie weist einen kastenförmigen Grundkörper 50 mit rechteckigem Querschnitt auf, der insbesondere zur Aufnahme von zwei Abschnitten eines rechteckigen Hauptgurts eines Windenergieanlagenrotorblatts vorgesehen ist. Zwei einander gegenüberliegende Flachseiten 30, 32 bilden die längeren Seiten des Rechteck-Querschnitts. Sie sind in Längsrichtung der Manschette 48 versetzt zueinander angeordnet und stehen jeweils an einem Ende über den Grundkörper 50 über.

Die beiden kürzeren Seiten des Rechteck-Querschnitts der Manschette 48 bzw. des Grundkörpers 50 werden von einer ersten Stirnseite 42 und einer zweiten Stirnseite 44 gebildet. An der ersten Stirnseite 42, nahe einem Ende der Manschette 48 bzw. des Grundkörpers 50, ist eine Angussöffnung 52 ausgebildet, über die Klebstoff zugeführt werden kann. Die Angussöffnung 52 mündet in einen Angusskanal 54, der sich in der Wandung der ersten Stirnseite 42 befindet. Der Angusskanal 54 erstreckt sich in Umfangsrichtung der Manschette, annähernd über die gesamte Höhe der ersten Stirnseite 42.

Schräg gegenüber dem Angusskanal 54 befindet sich ein Absaugkanal 56, der in der Wandung der zweiten Stirnfläche 44 ausgebildet ist und sich ebenfalls in Umfangsrichtung der Manschette 48 bzw. des Grundkörpers 50, im Wesentlichen über die gesamte Höhe der zweiten Stirnseite 44, erstreckt. Der Absaugkanal 56 ist mit einer Absaugöffnung 58 verbunden, an die zum Beispiel eine Vakuumpumpe angeschlossen werden kann.

Die geschilderte Anordnung des Angusskanals 54 ist in der Fig. 7 besser erkennbar. In dieser Figur sind ein erster Abschnitt 60 einer Tragstruktur und ein zweiter Abschnitt 62 derselben zu erkennen. Beide sind in der Manschette 48 angeordnet. Sie weisen eine mehrschnittige Verbindung in Form einer Verzahnung auf, wobei sich die Abschnitte 60, 62 in einem von der Verzahnung gebildeten Verbindungsbereich, der vollständig innerhalb der Manschette 48 angeordnet ist, überlappen. Zwischen den Zähnen der Verzahnung erkennt man Freiräume 64, die bereits teilweise mit über die Angussöffnung 52 und den Angusskanal 54 zugeführte Klebstoff gefüllt sind.

Der Angusskanal 54 ist so platziert, dass er sämtliche Freiräume 64 zwischen benachbarten Zähnen einmal kreuzt nahe der Spitzen der an dem anderen Abschnitt ausgebildeten Zähne. Von dort aus kann sich eine Klebstofffront gleichmäßig zu dem schräg gegenüberliegenden Absaugkanal 56 (nicht dargestellt) hin ausbreiten, wobei sämtliche Freiräume 64 der Verzahnung gleichmäßig mit Klebstoff gefüllt werden.

### Liste der verwendeten Bezugszeichen

- 10: Erstes Blattsegment
- 12: Zweites Blattsegment
- 14: Erster Abschnitt des druckseitigen Hauptgurts
- 16: Zweiter Abschnitt des druckseitigen Hauptgurts
- 18: Erster Abschnitt des saugseitigen Hauptgurts
- 20: Zweiter Abschnitt des saugseitigen Hauptgurts
- 22: Erster Abschnitt des Stegs
- 24: Zweiter Abschnitt des Stegs
- 26: Saugseitige Manschette
- 28: Druckseitige Manschette
- 30: Erste Flachseite
- 32: Zweite Flachseite
- 34: Aussparung
- 36: Schäftung
- 38: Druckseitige Rotorblattschale
- 40: Saugseitige Rotorblattschale
- 42: Erste Stirnseite
- 44: Zweite Stirnseite
- 46: Durchgangsöffnung
- 48: Manschette
- 50: Grundkörper
- 52: Angussöffnung
- 54: Angusskanal
- 56: Absaugkanal
- 58: Absaugöffnung
- 60: erster Abschnitt Tragstruktur
- 62: zweiter Abschnitt Tragstruktur
- 64: Freiraum

## Patentansprüche

1. Verfahren zur Herstellung eines Windenergieanlagenrotorblatts mit den folgenden Schritten:
• Bereitstellen eines ersten Blattsegments (10), das eine aerodynamische Oberfläche und einen ersten Abschnitt (14, 18) mindestens eines Gurts aus einem faserverstärkten Kunststoffmaterial, der in einer Längsrichtung des Rotorblatts verläuft, aufweist,
• Bereitstellen eines zweiten Blattsegments (12), das eine aerodynamische Oberfläche und einen zweiten Abschnitt (16, 20) des mindestens einen Gurts aufweist,
• Bereitstellen einer vorgefertigten Manschette (26, 28) aus einem faserverstärkten Kunststoffmaterial,
• Positionieren der beiden Blattsegmente (10, 12) relativ zu einander derart, dass der erste Abschnitt (14, 18) und der zweite Abschnitt (16, 20) in einem Verbindungsbereich überlappend angeordnet sind,
• Positionieren der Manschette (26, 28) derart, dass sie den Verbindungsbereich allseitig umschließt,
• Verkleben der Manschette (26, 28) mit dem ersten Abschnitt (14, 18),
• Verkleben der Manschette (26, 28) mit dem zweiten Abschnitt (16, 20),
• Verkleben des ersten Abschnitts (14, 18) mit dem zweiten Abschnitt (16, 20).

2. Verfahren nach Anspruch 1, **dadurch gekennzeichnet, dass** das Positionieren der beiden Blattsegmente (10, 12) relativ zueinander erst erfolgt, nachdem die Manschette (26, 28) mit dem ersten Abschnitt (14, 18) verklebt ist.

3. Verfahren nach Anspruch 1 oder 2, **dadurch gekennzeichnet, dass** zum Verkleben des ersten Abschnitts (14, 18) mit dem zweiten Abschnitt (16, 20) Klebstoff auf eine Kontaktfläche des ersten Abschnitts (14, 18) und/oder des zweiten Abschnitts (16, 20) aufgetragen wird, bevor die beiden Blattsegmente (10, 12) relativ zueinander positioniert werden und/oder dass zum Verkleben des zweiten Abschnitts (16, 20) mit der Manschette (26, 28) Klebstoff auf eine Kontaktfläche des zweiten Abschnitts (16, 20) und/oder der Manschette (26, 28) aufgetragen wird, bevor die beiden Blattsegmente (10, 12) relativ zueinander positioniert werden.

4. Verfahren nach Anspruch 1, **dadurch gekennzeichnet, dass** zwischen dem ersten Abschnitt (14, 18) und dem zweiten Abschnitt (16, 20) und/oder zwischen dem ersten Abschnitt (14, 18) und der Manschette (26, 28) und/oder zwischen dem zweiten Abschnitt (16, 20) und der Manschette (26, 28) Klebstoff angeordnet wird, nachdem die beiden Blattsegmente (10, 12) relativ zueinander positioniert worden sind.

5. Verfahren nach Anspruch 4, **dadurch gekennzeichnet, dass** das Anordnen des Klebstoffs mit einem Injektionsverfahren und/oder mit einem Infusionsverfahren erfolgt.

6. Verfahren nach Anspruch 5, **dadurch gekennzeichnet, dass** die Klebstoffzufuhr über einen in einer Wandung der Manschette (48) an einem ersten Ende der Manschette (48) angeordneten Angusskanal (54) erfolgt und wobei eine Absaugung der Luft über einen Absaugkanal (56) in einer Wandung der Manschette (48) erfolgt, wobei der Absaugkanal (56) dem Angusskanal (54) schräg gegenüberliegend angeordnet ist.

7. Verfahren nach einem der Ansprüche 1 bis 6, **dadurch gekennzeichnet, dass** das Rotorblatt zwei Gurte aufweist und dass zwischen den beiden Gurten ein Steg angeordnet ist, wobei das erste Blattsegment (10) einen ersten Abschnitt (22) des Stegs aufweist, der zwischen den ersten Abschnitten (14, 18) der beiden Gurte angeordnet und mit diesen verbunden ist, und das zweite Blattsegment (12) einen zweiten Abschnitt (24) des Stegs aufweist, der zwischen den zweiten Abschnitten (16, 20) der beiden Gurte angeordnet und mit diesen verbunden ist, wobei im Verbindungsbereich zwischen dem ersten Abschnitt (22) des Stegs und den ersten Abschnitten (14, 18) der beiden Gurte sowie zwischen dem zweiten Abschnitt (24) des Stegs und den zweiten Abschnitten (16, 20) der beiden Gurte jeweils eine Aussparung (34) vorhanden ist, wobei beim Positionieren der beiden Blattsegmente (10, 12) relativ zueinander zwei vorgefertigte Manschetten (26, 28) in die Aussparungen (34) eingesetzt werden.

8. Windenergieanlagenrotorblatt mit
• mindestens einem in einer Längsrichtung des Windenergieanlagenrotorblatts verlaufenden Gurt aus einem faserverstärkten Kunststoffmaterial,
• einem ersten Blattsegment (10), das eine aerodynamische Oberfläche und einen ersten Abschnitt (14, 18) des mindestens einen Gurts aufweist,
• einem zweiten Blattsegment (12), das eine aerodynamische Oberfläche und einen zweiten Abschnitt (16, 20) des mindestens einen Gurts aufweist,
• wobei der erste Abschnitt (14, 18) des mindestens einen Gurts und der zweite Abschnitt (16, 20) des mindestens einen Gurts derart miteinander verklebt sind, dass sie einander in einem Verbindungsbereich überlappen, **gekennzeichnet durch**
• eine vorgefertigte Manschette (26, 28) aus einem faserverstärkten Kunststoffmaterial, die den Verbindungsbereich allseitig umschließt und mit den beiden Abschnitten (14, 16, 18, 20) des Gurts verklebt ist.

9. Windenergieanlagenrotorblatt nach Anspruch 8, **dadurch gekennzeichnet, dass** zwei einander gegenüberliegende Innenflächen der Manschette (26, 28) an einander gegenüberliegenden äußeren Flächen des mindestens einen Gurts anliegen.

10. Windenergieanlagenrotorblatt nach Anspruch 8 oder 9, **dadurch gekennzeichnet, dass** eine Länge der Manschette (26, 28) größer ist als eine Länge des Verbindungsbereichs.

11. Windenergieanlagenrotorblatt nach einem der Ansprüche 8 bis 10, **dadurch gekennzeichnet, dass** der mindestens eine Gurt im Verbindungsbereich und an dem Verbindungsbereich benachbarten Längspositionen einen gleichmäßigen Außenquerschnitt aufweist und die Manschette eine Durchgangsöffnung (46), deren Innenquerschnitt auf den Außenquerschnitt abgestimmt ist.

12. Windenergieanlagenrotorblatt nach einem der Ansprüche 8 bis 11, **dadurch gekennzeichnet, dass** die Manschette (26, 28) zwei einander gegenüberliegende Flachseiten (30, 32) aufweist, die relativ zueinander in der Längsrichtung versetzt angeordnet sind.

13. Windenergieanlagenrotorblatt nach einem der Ansprüche 8 bis 12, **dadurch gekennzeichnet, dass** das Rotorblatt zwei Gurte aufweist und dass zwischen den beiden Gurten ein Steg angeordnet ist, mit den beiden Gurten verbunden ist und zwei Aussparungen (34) aufweist, in denen jeweils eine Manschette (26, 28) angeordnet ist.

14. Windenergieanlagenrotorblatt nach einem der Ansprüche 8 bis 13, **dadurch gekennzeichnet, dass** die Manschette (26, 28) in einer Wandung eine Öffnung und/oder einen Kanal zur Injektion oder Infusion eines Klebstoffs aufweist.

15. Windenergieanlagenrotorblatt nach einem der Ansprüche 8 bis 14, **dadurch gekennzeichnet, dass** die Manschette (48) einen Angusskanal (54) und einen Absaugkanal (56) aufweist, wobei der Angusskanal (54) in einer Wandung der Manschette (48) an einem ersten Ende der Manschette (48) und der Absaugkanal (56) dem Angusskanal (54) schräg gegenüberliegend in einer Wandung der Manschette (48) angeordnet ist.

## Claims

1. A method for producing a wind turbine rotor blade comprising the following steps:
• providing a first blade segment (10), which has an aerodynamic surface and a first section (14, 18) of at least one girder made of a fiber-reinforced plastic material, which extends in a longitudinal direction of the rotor blade,
• providing a second blade segment (12), which has an aerodynamic surface and a second section (16, 20) of the at least one girder,
• provisiding a prefabricated sleeve (26, 28) made of a fiber-reinforced plastic material,
• positioning the two blade segments (10, 12) relative to each other such that the first section (14, 18) and the second section (16, 20) are overlapped in a connection area,
• positioning the sleeve (26, 28) such that it surrounds the connection area on all sides,
• gluing the sleeve (26, 28) with the first section (14, 18),
• gluing the sleeve (26, 28) with the second section (16, 20),
• gluing the first section (14, 18) with the second section (16, 20).

2. The method according to claim 1, **characterized in that** the positioning of the two blade segments (10, 12) relative to each other only takes place after the sleeve (26, 28) is glued with the first section (14, 18).

3. The method according to claim 1 or 2, **characterized in that** for gluing the first section (14, 18) with the second section (16, 20), adhesive is applied to a contact surface of the first section (14, 18) and/or of the second section (16, 20) before the two blade segments (10, 12) are positioned relative to each other and/or **in that** the gluing of the second section (16, 20) with the sleeve (26, 28), adhesive is applied to a contact surface of the second section (16, 20) and/or of the sleeve (26, 28) before the two blade segments (10, 12) are positioned relative to each other.

4. The method according to claim 1, **characterized in that** adhesive is arranged between the first section (14, 18) and the second section (16, 20) and/or between the first section (14, 18) and the sleeve (26, 28) and/or between the second section (16, 20) and the sleeve (26, 28) after the two blade segments (10, 12) have been positioned relative to each other.

5. The method according to claim 4, **characterized in that** the arrangement of the adhesive takes place with an injection method and/or with an infusion method.

6. The method according to claim 5, **characterized in that** the supply of adhesive takes place via a feed channel (54) arranged in a wall of the sleeve (48) on a first end of the sleeve (48) and wherein an exhaust of the air takes place via a suction channel (56) in a wall of the sleeve (48), wherein the suction channel (56) is arranged diagonally opposite the feed channel.

7. The method according to one of claims 1 to 6, **characterized in that** the rotor blade has two girders and **in that** a web is arranged between the two girders, wherein the first blade segment (10) has a first section (22) of the web, which is arranged between the first sections (14, 18) of the two girders and is connected with them, and the second blade segment (12) has a second section (24) of the web, which is arranged between the second sections (16, 20) of the two girders and is connected with them, wherein a recess (34) is respectively present in the connection area between the first section (22) of the web and the first sections (14, 18) of the two girders as well as between the second section (24) of the web and the second sections (16, 20) of the two girders, wherein during the positioning of the two blade segments (10, 12) relative to each other two prefabricated sleeves (26, 28) are inserted into the recesses (34).

8. A wind turbine rotor blade comprising
• at least one girder extending in a longitudinal direction of the wind turbine rotor blade made of a fiber-reinforced plastic material,
• a first blade segment (10), which has an aerodynamic surface and a first section (14, 18) of the at least one girder,
• a second blade segment (12), which has an aerodynamic surface and a second section (16, 20) of the at least one girder,
• wherein the first section (14, 18) of the at least one girder and the second section (16, 20) of the at least one girder are glued together such that they overlap in a connection area, **characterized by**
• a prefabricated sleeve (26, 28) made of a fiber-reinforced plastic material, which surrounds the connection area on all sides and is glued with the two sections (14, 16, 18, 20) of the girder.

9. The wind turbine rotor blade according to claim 8, **characterized in that** two opposite-lying inner surfaces of the sleeve (26, 28) abut against opposite-lying outer surfaces of the at least one girder.

10. The wind turbine rotor blade according to claim 8 or 9, **characterized in that** a length of the sleeve (26, 28) is greater than a length of the connection area.

11. The wind turbine rotor blade according to one of claims 8 to 10, **characterized in that** the at least one girder has an even outer cross-section in the connection area and at longitudinal positions neighboring the connection area and the sleeve has a through-hole (46), the inner cross-section of which is adjusted to the outer cross-section.

12. The wind turbine rotor blade according to one of claims 8 to 11, **characterized in that** the sleeve (26, 28) has two opposite-lying flat sides (30, 32), which are arranged offset relative to each other in the longitudinal direction.

13. The wind turbine rotor blade according to one of claims 8 to 12, **characterized in that** the rotor blade has two girders and **in that** a web is arranged between the two girders, which is connected with the two girders and has two recesses (34), in each of which a sleeve (26, 28) is arranged.

14. The wind turbine rotor blade according to one of claims 8 to 13, **characterized in that** the sleeve (26, 28) in a wall has an opening and/or a channel for the injection or infusion of an adhesive.

15. The wind turbine rotor blade according to one of claims 8 to 14, **characterized in that** the sleeve (48) has a feed channel (54) and a suction channel (56), wherein the feed channel (54) is arranged in a wall of the sleeve (48) on a first end of the sleeve (48) and the suction channel (56) is arranged diagonally opposite the feed channel (54) in a wall of the sleeve (48).

## Revendications

1. Procédé de fabrication d'une pale de rotor d'éolienne avec les étapes suivantes :
• mise à disposition d'un premier segment de pale (10) présentant une surface aérodynamique et une première section (14, 18) d'au moins une membrure en une matière plastique renforcée par fibres qui court dans un sens longitudinal de la pale de rotor,
• mise à disposition d'un deuxième segment de pale (12) présentant une surface aérodynamique et une deuxième section (16, 20) de la au moins une membrure,
• mise à disposition d'une manchette préfabriquée (26, 28) en une matière plastique renforcée par fibres,
• positionnement des deux segments de pale (10, 12) l'un par rapport à l'autre de manière à ce que la première section (14, 18) et la deuxième section (16, 20) soient disposées de manière à se chevaucher dans une zone de liaison,
• positionnement de la manchette (26, 28) de manière à ce qu'elle entoure la zone de liaison sur tous les côtés,
• collage de la manchette (26, 28) avec la première section (14, 18),
• collage de la manchette (26, 28) avec la deuxième section (16, 20),
• collage de la première section (14, 18) avec la deuxième section (16, 20).

2. Procédé selon la revendication 1, **caractérisé en ce que** le positionnement des deux segments de pale (10, 12) l'un par rapport à l'autre ne se fait qu'après que la manchette (26, 28) est collée avec la première section (14, 18).

3. Procédé selon la revendication 1 ou 2, **caractérisé en ce que**, pour le collage de la première section (14, 18) avec la deuxième section (16, 20), de la colle est appliquée sur une surface de contact de la première section (14, 18) et/ou de la deuxième section (16, 20) avant que les deux segments de pale (10, 12) soient positionnés l'un par rapport à l'autre et/ou que, pour le collage de la deuxième section (16, 20) avec la manchette (26, 28), de la colle est appliquée sur une surface de contact de la deuxième section (16, 20) et/ou de la manchette (26, 28) avant que les deux segments de pale (10, 12) soient positionnés l'un par rapport à l'autre.

4. Procédé selon la revendication 1, **caractérisé en ce que** est disposée entre la première section (14, 18) et la deuxième section (16, 20) et/ou entre la première section (14, 18) et la manchette (26, 28) et/ou entre la deuxième section (16, 20) et la manchette (26, 28) de la colle, après que les deux segments de pale (10, 12) ont été positionnés l'un par rapport à l'autre.

5. Procédé selon la revendication 4, **caractérisé en ce que** la disposition de la colle se fait avec un procédé d'injection et/ou avec un procédé d'infusion.

6. Procédé selon la revendication 5, **caractérisé en ce que** l'alimentation en colle se fait via un canal de carotte (54) disposé dans une paroi de la manchette (48) à une première extrémité de la manchette (48), et dans lequel on assiste à une aspiration de l'air via un canal d'aspiration (56) dans une paroi de la manchette (48), dans lequel le canal d'aspiration (56) est disposé en biais en face du canal de carotte (54).

7. Procédé selon l'une quelconque des revendications 1 à 6, **caractérisé en ce que** la pale de rotor comporte deux membrures et **en ce qu'**une entretoise est disposée entre les deux membrures, dans lequel le premier segment de pale (10) présente une première section (22) de l'entretoise disposée entre les premières sections (14, 18) des deux membrures et reliée à ces dernières, et le deuxième segment de pale (12) présente une deuxième section (24) de l'entretoise disposée entre les deuxièmes sections (16, 20) des deux membrures et reliée à ces dernières, dans lequel il existe un évidement (34) dans la zone de liaison respectivement entre la première section (22) de l'entretoise et les premières sections (14, 18) des deux membrures ainsi que entre la deuxième section (24) de l'entretoise et les deuxièmes sections (16, 20) des deux membrures, dans lequel, pour le positionnement des deux segments de pale (10, 12) l'un par rapport à l'autre, on utilise deux manchettes préfabriquées (26, 28) dans les évidements (34).

8. Pale de rotor d'éolienne avec
• au moins une membrure en une matière plastique renforcé par fibres courant dans un sens longitudinal de la pale de rotor d'éolienne,
• un premier segment de pale (10) présentant une surface aérodynamique et une première section (14, 18) de la au moins une membrure,
• un deuxième segment de pale (12) présentant une surface aérodynamique et une deuxième section (16, 20) de la au moins une membrure,
• dans lequel la première section (14, 18) de la au moins une membrure et la deuxième section (16, 20) de la au moins une membrure sont collées l'un à l'autre de manière à ce qu'elles se chevauchent dans une zone de liaison, **caractérisé par**
• une manchette préfabriquée (26, 28) en une matière plastique renforcée par fibres qui entoure la zone de liaison sur tous les côtés et est collée avec les deux sections (14, 16, 18, 20) de la membrure.

9. Pale de rotor d'éolienne selon la revendication 8, **caractérisée en ce que** deux surfaces intérieures de la manchette (26, 28) sont en contact avec des surfaces extérieures disposées l'une en face de l'autre de la au moins une membrure.

10. Pale de rotor d'éolienne selon la revendication 8 ou 9, **caractérisée en ce qu'**une longueur de la manchette (26, 28) est supérieure à une longueur de la zone de liaison.

11. Pale de rotor d'éolienne selon l'une quelconque des revendications 8 à 10, **caractérisée en ce que** la au moins une membrure présente dans la zone de liaison et aux positions longitudinales adjacentes à la zone de liaison une section extérieure uniforme et la manchette un trou de passage (46) dont la section interne est accordée sur la section extérieure.

12. Pale de rotor d'éolienne selon l'une quelconque des revendications 8 à 11, **caractérisée en ce que** la manchette (26, 28) présente deux côtés plats (30, 32) disposés l'un en face de l'autre et décalés l'un par rapport à l'autre dans le sens longitudinal.

13. Pale de rotor d'éolienne selon l'une quelconque des revendications 8 à 12, **caractérisée en ce que** la pale de rotor présente deux membrures et **en ce que** une entretoise est disposée entre les deux membrures, est reliée aux deux membrures et présente deux évidements (34) dans lesquels est respectivement disposée une manchette (26, 28).

14. Pale de rotor d'éolienne selon l'une quelconque des revendications 8 à 13, **caractérisée en ce que** la manchette (26, 28) présente dans une paroi un orifice et/ou un canal pour l'injection ou l'infusion d'une colle.

15. Pale de rotor d'éolienne selon l'une quelconque des revendications 8 à 14, **caractérisée en ce que** la manchette (48) présente un canal de carotte (54) et un canal d'aspiration (56), dans lequel le canal de carotte (54) est disposé dans une paroi de la manchette (48) à une première extrémité de la manchette (48) et le canal d'aspiration (56) est disposé en biais en face du canal de carotte (54) dans une paroi de la manchette (48).
